# EUROPEAN PATENT SPECIFICATION

(11) **EP 4 215 407 B1**
(45) Date of publication and mention of the grant of the patent: **31.07.2024**
(21) Application number: 22152897.9
(22) Date of filing: 24.01.2022
(51) Int. Cl.: B60L 53/18, B60L 53/16, H01R 13/642, B60L 53/10, B60L 53/14

(54) **MALE PLUG AND FEMALE RECEPTACLE OF CHARGER EXTENSION CABLE FOR ELECTRIC VEHICLES**
STECKER UND STECKDOSE EINES LADEGERÄTVERLÄNGERUNGSKABELS FÜR ELEKTROFAHRZEUGE
PRISE MÂLE ET RÉCEPTACLE FEMELLE DE CÂBLE D'EXTENSION DE CHARGEUR POUR VÉHICULES ÉLECTRIQUES

(43) Date of publication of application: 26.07.2023
(73) Proprietor: Leading Stand Ltd., Hsinchu City (TW)
(72) Inventor: SHEN, A-Ching, Hsinchu City (TW)
(74) Representative: Viering, Jentschura & Partner mbB Patent- und Rechtsanwälte

(56) References cited:
- US-B1- 9 744 867

## Description

### FIELD OF THE INVENTION

The present invention relates to a male plug and a female receptacle of a charger extension cable for electric vehicles which are connected with the home electric circuit electrically to enhance a charging convenience

### BACKGROUND OF THE INVENTION

New energy vehicles have become a key development project in countries all over the world in recent years, and rechargeable electric vehicles are the most common new energy vehicles currently. Rechargeable electric vehicles need to be charged at charging stations and/or other supporting charging facilities, but charging vehicles are under pressure because of the long charging time and the inability of the owners to wait for a long time. When the vehicle owner goes to the charging station to charge during the day, it is quite inconvenient because there are many private trips and pending work during the day, or because the charging place cannot be found and the charging column is insufficient. When charging at the charging station at night, the user may return to the residence or a nearby hotel to rest during the charging period. If the rest time is exceeded, the electric vehicle will be fully charged and still occupy the charging space. Therefore, the owner must pay an additional fee which occupies a parking space.

To overcome above-mentioned problem, a charger extension cable for electric vehicles has been developed in TW Patent No. M543493 by the inventor of the present invention. When the vehicle owner uses the charger extension cord to charge, they can charge anytime and anywhere during work or rest, thus reducing the anxiety and pressure because of the lacks of a charging place and charging posts. The charger extension cable for the electric vehicles of TW Patent No. M543493 is also filed and granted in CN Patent No. 201621044799.5, US Patent No. 9,744,867, DE Patent No. 202017104185.9, JP Patent No. 321260, and SE Patent No. U-201730880.

The charger extension cable for electric vehicles contains an extension cord plug connected to a household circuit, the extension cord plug connected to an electromagnetic protection switch via a first extension cord, the current output end of the electromagnetic protection switch is connected to an electricity meter, and the current output end of the electricity meter passes through a first extension cord. The second extension cord is connected to an extension cord socket, and the extension cord socket is configured to connect with the charging gun. Accordingly, it has electromagnetic protection which can improve the safety during charging and can also be connected with household circuits, so the vehicle owners can charge anywhere except charging stations or charging piles, effectively solving the problem of uneven supply of charging parking spaces.

Preferably, when using the electricity meter, it is convenient for the user to directly visually count the amount of electricity used for each charge. However, cross sections of the respective one male plug and cross sections of the respective one female receptacle are flat or polygonal, so the respective one male plug electrically contacts with the respective one female receptacle incompletely, thus reducing charging efficiency.

Furthermore, the circular-live wire pin and the circular neutral pin of the respective one male plug are arranged symmetrical to the circular ground-wire socket, the circular live-wire socket and the circular neutral-wire socket of the respective one female receptacle, thus eliminating foolproof protection and using safety of the respective one male plug and the respective one female receptacle, and increasing the charging danger.

The present invention has arisen to mitigate and/or obviate the aforedescribed disadvantages.

### SUMMARY OF THE INVENTION

The primary objective of the present invention is to provide a male plug and a female receptacle of a charger extension cable for electric vehicles by which cross sections of the columnar ground pin, the circular-live wire pin, and the circular neutral pin of the respective one male plug and cross sections of the circular ground-wire socket, the circular live-wire socket and the circular neutral-wire socket of the respective one female receptacle are circular so that the respective one male plug electrically contacts with the respective one female receptacle completely, thus enhancing charging efficiency.

Another objective of the present invention is to provide a male plug and a female receptacle of a charger extension cable for electric vehicles by which the columnar ground pin, the circular-live wire pin and the circular neutral pin of the respective one male plug are arranged asymmetrical to the circular ground-wire socket, the circular live-wire socket and the circular neutral-wire socket of the respective one female receptacle to obtain foolproof protection and using safety of the respective one male plug and the respective one female receptacle, reduce battery consumption, eliminate high-voltage electrical equipment, decrease the danger of high-voltage electricity and waste of resources for the country and individuals

To obtain the above mentioned objectives, a male plug and a female receptacle of a charger extension cable for electric vehicles provided by the present invention is configured to be connected between a home electric circuit and a charging gun of a respective one electric vehicle, and the male plug and the female receptacle of the charger extension cable contains: a body of the charger extension cable.

The body includes a first extension cord, a distal end of which is connected with a first male plug, and the first male plug being electrically connected with the home electric circuit. The home electric circuit has an incoming terminal electrically connected thereon and with a current output end of a main power switch of the home electric circuit in a power outgoing direction, the incoming terminal has a first female receptacle connected on an end thereof opposite to the main power switch of the home electric circuit, and the first female receptacle is electrically connected with a first end of the first male plug of the first extension cord.

The first extension cord includes an electromagnetic protection switch connected on a second end of the first extension cord. The electromagnetic protection switch has an electricity meter connected on a current output end thereof, the current output end of the electromagnetic protection switch is connected with a second female receptacle via a second extension cord, and a specification of the second female receptacle is identical to a specification of the first female receptacle. The second female receptacle is configured to connect with the charging gun of the respective electric vehicle, the charging gun includes a second male plug connected on a first end thereof, and a specification of the second male plug is identical to a specification of the first male plug. The second male plug is connected with the second female receptacle of the second extension cord, the charging gun further includes a third female receptacle connected on a second end thereof, and a specification of the third female receptacle is identical to the specifications of the first and second female receptacles.

A respective one of the first, second, third female receptacles includes a substrate, a circular ground-wire socket formed on a front end of the substrate of the respective one female receptacle, a circular live-wire socket and a circular neutral wire which are formed adjacent to the circular ground-wire socket, and a first width and a first height are formed between the circular ground-wire socket and the circular live-wire socket. A second width and a second height are formed between the circular ground-wire socket and the circular neutral-wire socket, the first width is not equal to the second width, and the first height is not equal to the second height.

A respective one of the first, second, third male plugs includes a base, a columnar ground pin formed on a front end of the base, a circular live-wire pin and a circular neutral pin which are both formed adjacent to the columnar ground pin, and the columnar ground pin corresponds to the circular ground-wire socket of the respective one female receptacle, the circular live-wire pin corresponds to the circular live-wire socket of the respective one female receptacle, and the circular neutral pin corresponds to the circular neutral-wire socket of the respective one female receptacle.

### BRIEF DESCRIPTION OF THE DRAWINGS

FIG. 1 is a cross sectional view showing the assembly of a male plug and a female receptacle of a charger extension cable for electric vehicles according to a first embodiment of the present invention.
FIG. 2 is a perspective view showing the exploded components of the male plug and the female receptacle of the charger extension cable for the electric vehicles according to the first embodiment of the present invention.
FIG. 3 is a front elevational view showing the assembly of the female receptacle of the charger extension cable for the electric vehicles according to the first embodiment of the present invention.
FIG. 4 is a cross sectional view showing the assembly of the female receptacle of the charger extension cable for the electric vehicles according to the first embodiment of the present invention.
FIG. 5 is a front elevational view showing the assembly of the male plug of the charger extension cable for the electric vehicles according to the first embodiment of the present invention.
FIG. 6 is a cross sectional view showing the assembly of the male plug of the charger extension cable for the electric vehicles according to the first embodiment of the present invention.
FIG. 7 is a cross sectional view showing the exploded components of the male plug and the female receptacle of the charger extension cable for the electric vehicles according to the first embodiment of the present invention.
FIG. 8 is a cross sectional view showing the assembly of the male plug and the female receptacle of the charger extension cable for the electric vehicles according to the first embodiment of the present invention.
FIG. 9 is another cross sectional view showing the assembly of the male plug and the female receptacle of the charger extension cable for the electric vehicles according to the first embodiment of the present invention.
FIG. 10 is a cross sectional view showing the exploded components of a male plug and a female receptacle of a charger extension cable for electric vehicles according to a second embodiment of the present invention.
FIG. 11 is a cross sectional view showing the assembly of the male plug and the female receptacle of the charger extension cable for the electric vehicles according to the second embodiment of the present invention.
FIG. 12 is a block diagram showing the structure of the male plug and the female receptacle of the charger extension cable according to the present invention.

### DETAILED DESCRIPTION OF THE PREFERRED EMBODIMENTS

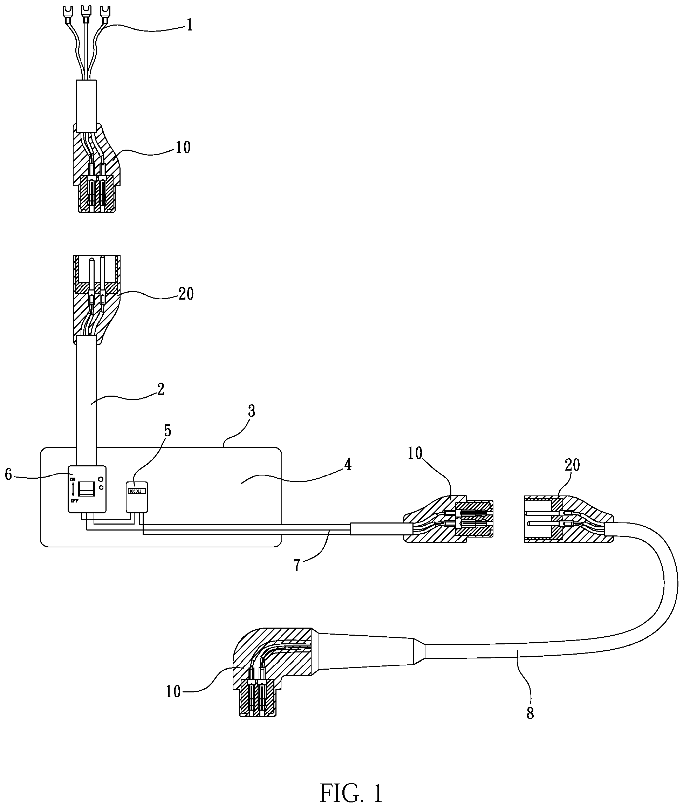

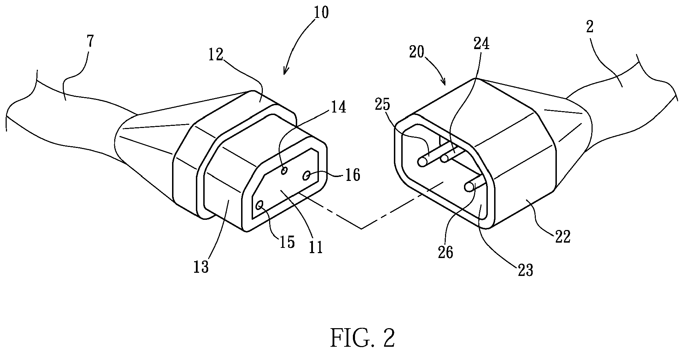

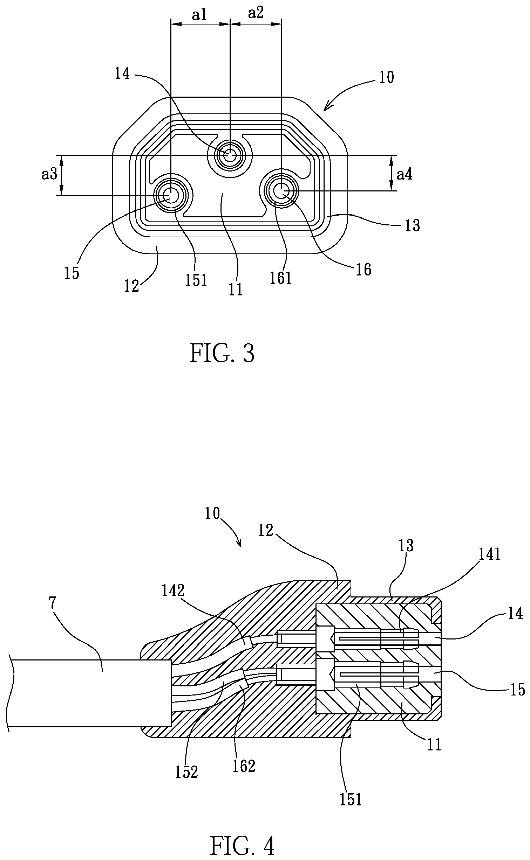

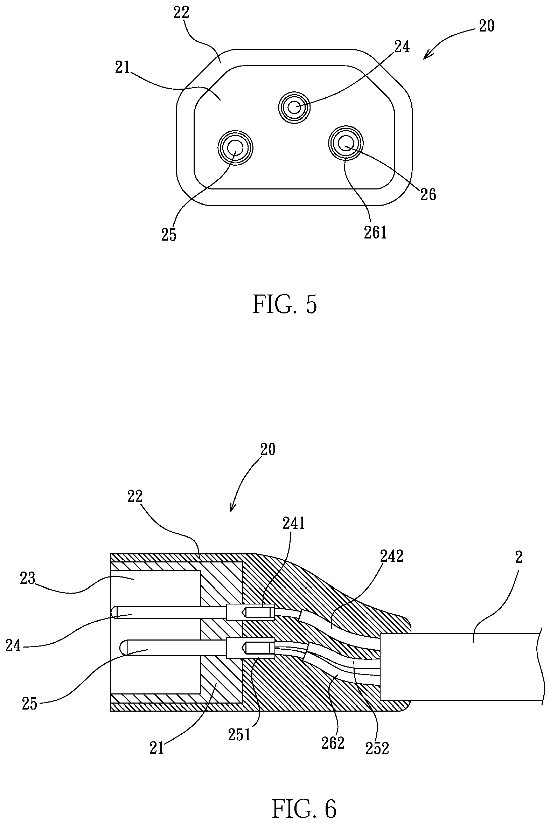

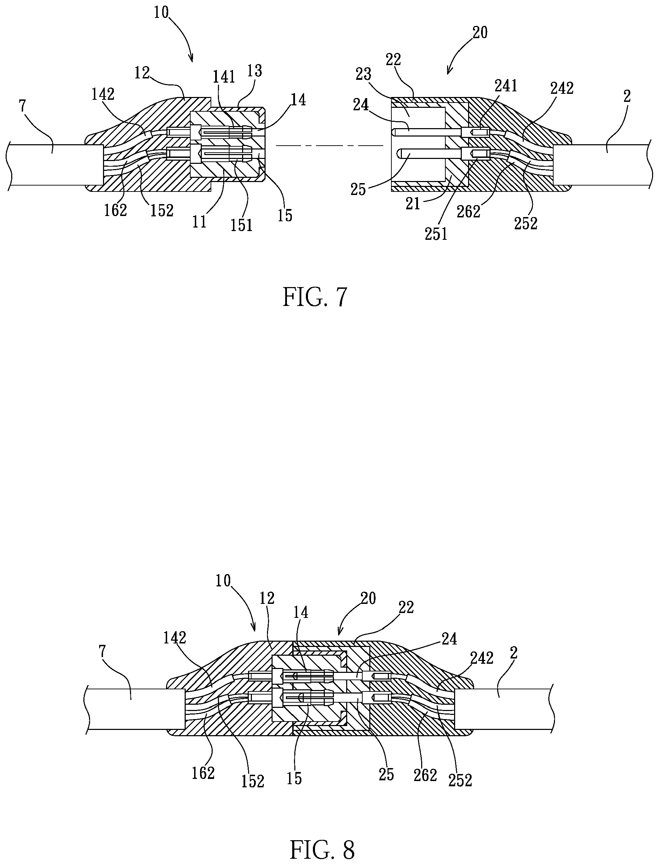

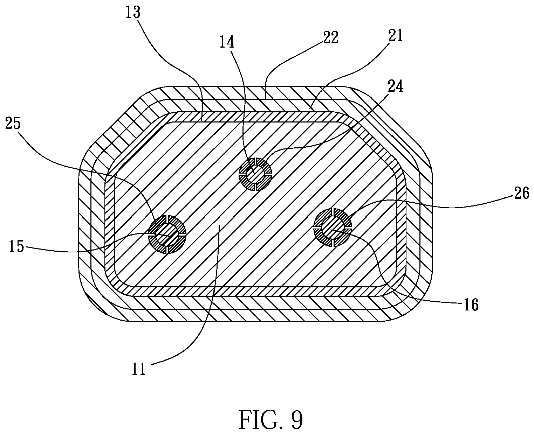

With reference to FIGS. 1-9, a male plug and a female receptacle of a charger extension cable for electric vehicles according to a first embodiment of the present invention is configured to be connected between a home electric circuit and a charging gun 8 of a respective one electric vehicle, and the male plug and the female receptacle of the charger extension cable comprise:
a body of the charger extension cable including a first extension cord 2, a distal end of which is connected with a first male plug 20, and the first male plug 20 being electrically connected with the home electric circuit, wherein the home electric circuit has an incoming terminal 1 electrically connected thereon and with a current output end of a main power switch of the home electric circuit in a power outgoing direction, the incoming terminal 1 has a first female receptacle 10 connected on an end thereof opposite to the main power switch of the home electric circuit, and the first female receptacle 10 is electrically connected with a first end of the first male plug 20 of the first extension cord 2;
the first extension cord 2 including an electromagnetic protection switch 6 connected on a second end of the first extension cord 2, wherein the electromagnetic protection switch 6 has an electricity meter 5 connected on a current output end thereof, the current output end of the electromagnetic protection switch 6 is connected with a second female receptacle 10 via a second extension cord 7, and a specification of the second female receptacle 10 is identical to a specification of the first female receptacle 10, wherein the second female receptacle 10 is configured to connect with the charging gun 8 of the respective electric vehicle, the charging gun 8 includes a second male plug 20 connected on a first end thereof, and a specification of the second male plug 20 is identical to a specification of the first male plug 20, wherein the second male plug 20 is connected with the second female receptacle 10 of the second extension cord 7, the charging gun 8 further includes a third female receptacle 10 connected on a second end thereof, and a specification of the third female receptacle 10 is identical to the specifications of the first and second female receptacles 10;
wherein a respective one of the first, second, third female receptacles 10 includes a substrate 11, a circular ground-wire socket 14 formed on a front end of the substrate 11 of the respective one female receptacle 10, and a circular live-wire socket 15 and a circular neutral wire 16 which are formed adjacent to the circular ground-wire socket 14, wherein a first width a1 and a first height a3 are formed between the circular ground-wire socket 14 and the circular live-wire socket 15, a second width a2 and a second height a4 are formed between the circular ground-wire socket 14 and the circular neutral-wire socket 16, the first width a1 is not equal to the second width a2, and the first height a3 is not equal to the second height 4a; and
wherein a respective one of the first, second, third male plugs 20 includes a base 21, a columnar ground pin 24 formed on a front end of the base 21, a circular live-wire pin 25 and a circular neutral pin 26 which are both formed adjacent to the columnar ground pin 24, wherein the columnar ground pin 24 corresponds to the circular ground-wire socket 14 of the respective one female receptacle 10, the circular live-wire pin 25 corresponds to the circular live-wire socket 15 of the respective one female receptacle 10, and the circular neutral pin 26 corresponds to the circular neutral-wire socket 16 of the respective one female receptacle 10.

The body of the charger extension cable further includes a protective case 3 configured to accommodate the electromagnetic protection switch 6 and the electricity meter 5, and the protective case 3 has a receiving cavity 4 configured to receive the first extension cord 2 and the second extension cord 7;
wherein the substrate 11 of the respective one female receptacle 10 has a female insulation sleeve 12 and a guide segment 13 extending from the female insulation sleeve 12; the circular ground-wire socket 14 of the respective one female receptacle 10 has a ground-wire accommodation sheath 141 extending from an end thereof, and the ground-wire accommodation sheath 141 has a first ground wire 142 extending from an end of the ground-wire accommodation sheath 141 opposite to the circular ground-wire socket 14; wherein the circular live-wire socket 15 of the respective one female receptacle 10 has a live-wire accommodation sheath 151 extending from an end thereof, and the live-wire accommodation sheath 151 has a first live wire 152 extending from an end thereof opposite to the circular live-wire socket 15, wherein the circular neutral-wire socket 16 of the respective one female receptacle 10 has a neutral-wire accommodation sheath 161 formed on an end thereof, and the neutral-wire accommodation sheath 161 has a first neutral wire 162 extending from an end thereof opposite to the circular neutral-wire socket 16;
wherein the base 21 of the respective one male plug 20 has a male insulation sleeve 22 and a receiving groove 23 defined in the male insulation sleeve 22 and configured to accommodate the guide segment 13 of the respective female receptacle 10; the columnar ground pin 24 of the respective one male plug 20 has a ground-wire holder 241 extending from an end thereof, and the ground-wire holder 241 has a second ground wire 142 extending from an end of the ground-wire holder 241 opposite to the columnar ground pin 24; wherein the circular live-wire pin 25 of the respective one male plug 20 has a live-wire holder 251 extending from an end thereof, and the live-wire holder 251 has a second live wire 252 extending from an end thereof opposite to the circular-live wire pin 25, wherein the circular neutral pin 26 of the respective one male plug 20 has a neutral-wire holder 261 formed on an end thereof, and the neutral-wire holder 261 has a second neutral wire 262 extending from an end thereof opposite to the circular neutral pin 26;
wherein a diameter of the columnar ground pin 24 of the respective one male plug 20 is less than a diameter of the circular live-wire pin 25 and a diameter of the circular neutral pin 26; a diameter of the circular ground-wire socket 14 of the respective one female receptacle 10 is less than a diameter of the circular live-wire socket 15 and the circular neutral-wire socket 16.

Thereby, cross sections of the columnar ground pin 24, the circular-live wire pin 25, and the circular neutral pin 26 of the respective one male plug 20 and cross sections of the circular ground-wire socket 14, the circular live-wire socket 15 and the circular neutral-wire socket 16 of the respective one female receptacle 10 are circular so that the respective one male plug 20 electrically contacts with the respective one female receptacle 10 completely, thus enhancing charging efficiency. Preferably, the respective one male plug 20 and the respective one female receptacle 10 are connected with the home electric circuit electrically to enhance a charging convenience. The columnar ground pin 24, the circular-live wire pin 25, and the circular neutral pin 26 of the respective one male plug 20 are arranged asymmetrical to the circular ground-wire socket 14, the circular live-wire socket 15 and the circular neutral-wire socket 16 of the respective one female receptacle 10 to obtain foolproof protection of the respective one male plug 20 and the respective one female receptacle 10, using unity and safety of the electric vehicles, and share specification of the electric vehicles in a world.

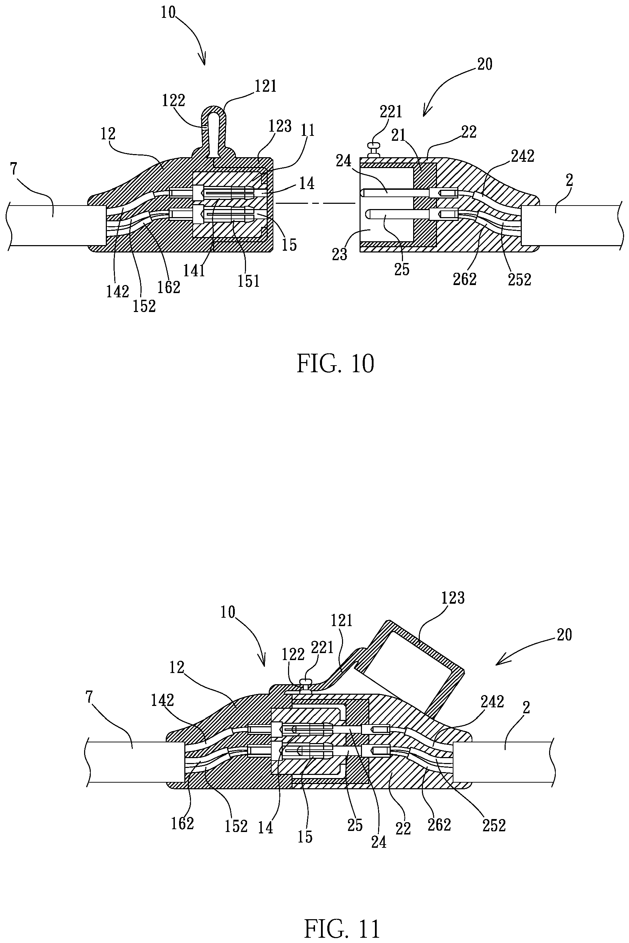

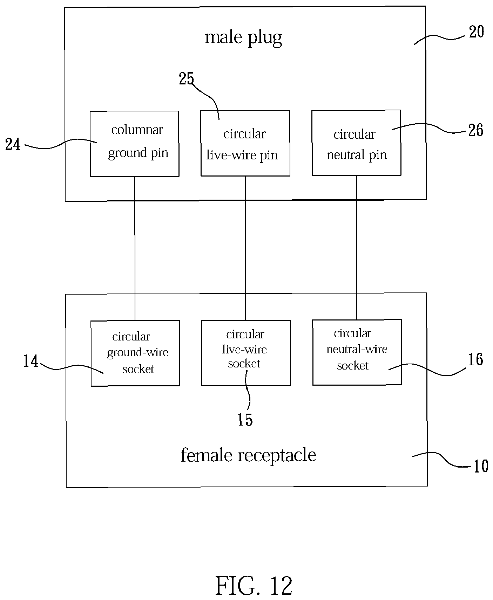

Referring to FIGS. 10-11, a difference of a male plug and a female receptacle of a charger extension cable of a second embodiment from that of the first emdboimdnet comprises: a female insulation sleeve 12 of a first female receptacle 10 having a connection section 121 one-piece formed on a top of the female insulation sleeve 12, a guard cap 123 formed on an end of the connection section 121, wherein the guard cap 123 is covered on the guide segment 13 to prevent an object being inserted into the first female receptacle 10, when the first female receptacle 10 is not electrically connected. The connection section 121 has a locking aperture 122 defined on a predetermined position thereof, and the male insulation sleeve 22 of the respective one male plug 20 has a post extending from a predetermined position of a top thereof, such that the locking aperture 122 is engaged with the post 221, when the first female receptacle 10 is electrically connected with the respective one plug 20, thus connecting the respective one male plug 20 with the first female receptacle 10 securely. FIG. 12 is a block diagram showing the structure of the male plug and the female receptacle of the charger extension cable according to the present invention.

The male plug and the female receptacle of the charger extension cable of the second embodiment comprise a body which includes a first extension cord 2, a distal end of which is connected with the first female receptacle 10, and the first female receptacle 10 is electrically connected with a home electric circuit, wherein the home electric circuit has an incoming terminal 1 electrically connected thereon and with an current output end of a main power switch of the home electric circuit in a power outgoing direction, and the incoming terminal 1 has a male plug 20 connected on an end thereof opposite to the main power switch of the home electric circuit, wherein the male plug 20 is electrically connected with a first end of the female receptacle 10 of the first extension cord 2;
wherein the first extension cord 2 includes an electromagnetic protection switch 6 connected on a second end thereof, the electromagnetic protection switch 6 has an electricity meter 5 connected on a current output end thereof, and the current output end of the electromagnetic protection switch 6 is connected with a second male plug 20 via a second extension cord 7, wherein a specification of the second male plug 20 is identical to a specification of the first male plug 20, and the second female receptacle 10 is configured to connect with the charging gun 8 of the respective electric vehicle, wherein the charging gun 8 includes a second female receptacle 10 connected on a first end thereof, and a specification of the second female receptacle 10 is identical to a specification of the first female receptacle 10, wherein the second female receptacle 10 is connected with the second male receptacle 20 of the second extension cord 7, and the charging gun 8 further includes a third male plug 20 connected on a second end thereof, wherein a specification of the third male plug 20 is identical to the specifications of the first and second male plugs 20.

Thereby, the respective one male plug 20 and the respective one female receptacle 10 are connected with the home electric circuit electrically to enhance a charging convenience

While the preferred embodiments of the invention have been set forth for the purpose of disclosure, modifications of the disclosed embodiments of the invention as well as other embodiments thereof may occur to those skilled in the art. Accordingly, the appended claims are intended to cover all embodiments which do not depart from the scope of the invention as defined by the appended claims.

## Claims

1. A male plug and a female receptacle of a charger extension cable for electric vehicles being configured to be connected between a home electric circuit and a charging gun of a respective one electric vehicle, and the male plug and the female receptacle of the charger extension cable comprising:
a body of the charger extension cable including a first extension cord, a distal end of which is connected with a first male plug, and the first male plug being electrically connected with the home electric circuit, wherein the home electric circuit has an incoming terminal electrically connected thereon and with a current output end of a main power switch of the home electric circuit in a power outgoing direction, the incoming terminal has a first female receptacle connected on an end thereof opposite to the main power switch of the home electric circuit, and the first female receptacle is electrically connected with a first end of the first male plug of the first extension cord;
the first extension cord including an electromagnetic protection switch connected on a second end of the first extension cord, wherein the electromagnetic protection switch has an electricity meter connected on a current output end thereof, the current output end of the electromagnetic protection switch is connected with a second female receptacle via a second extension cord, and a specification of the second female receptacle is identical to a specification of the first female receptacle, wherein the second female receptacle is configured to connect with the charging gun of the respective electric vehicle, the charging gun includes a second male plug connected on a first end thereof, and a specification of the second male plug is identical to a specification of the first male plug, wherein the second male plug is connected with the second female receptacle of the second extension cord, the charging gun further includes a third female receptacle connected on a second end thereof, and a specification of the third female receptacle is identical to the specifications of the first and second female receptacles;
wherein a respective one of the first, second, third female receptacles includes a substrate, a circular ground-wire socket formed on a front end of the substrate of the respective one female receptacle, a circular live-wire socket and a circular neutral wire which are formed adjacent to the circular ground-wire socket, and a first width and a first height are formed between the circular ground-wire socket and the circular live-wire socket, wherein a second width and a second height are formed between the circular ground-wire socket and the circular neutral-wire socket, the first width is not equal to the second width, and the first height is not equal to the second height; and
wherein a respective one of the first, second, third male plugs includes a base, a columnar ground pin formed on a front end of the base, a circular live-wire pin and a circular neutral pin which are both formed adjacent to the columnar ground pin, and the columnar ground pin corresponds to the circular ground-wire socket of the respective one female receptacle, the circular live-wire pin corresponds to the circular live-wire socket of the respective one female receptacle, and the circular neutral pin corresponds to the circular neutral-wire socket of the respective one female receptacle.

2. The male plug and the female receptacle of the charger extension cable as claimed in claim 1, wherein the body of the charger extension cable further includes a protective case configured to accommodate the electromagnetic protection switch and the electricity meter, and the protective case has a receiving cavity configured to receive the first extension cord and the second extension cord.

3. The male plug and the female receptacle of the charger extension cable as claimed in claim 1, wherein the substrate of the respective one female receptacle has a female insulation sleeve and a guide segment extending from the female insulation sleeve; the circular ground-wire socket of the respective one female receptacle has a ground-wire accommodation sheath extending from an end thereof, and the ground-wire accommodation sheath has a first ground wire extending from an end of the ground-wire accommodation sheath opposite to the circular ground-wire socket; wherein the circular live-wire socket of the respective one female receptacle has a live-wire accommodation sheath extending from an end thereof, and the live-wire accommodation sheath has a first live wire extending from an end thereof opposite to the circular live-wire socket, wherein the circular neutral-wire socket of the respective one female receptacle has a neutral-wire accommodation sheath formed on an end thereof, and the neutral-wire accommodation sheath has a first neutral wire extending from an end thereof opposite to the circular neutral-wire socket.

4. The male plug and the female receptacle of the charger extension cable as claimed in claim 1, wherein the base of the respective one male plug has a male insulation sleeve and a receiving groove defined in the male insulation sleeve and configured to accommodate the guide segment of the respective female receptacle; the columnar ground pin of the respective one male plug has a ground-wire holder extending from an end thereof, and the ground-wire holder has a second ground wire extending from an end of the ground-wire holder opposite to the columnar ground pin; wherein the circular live-wire pin of the respective one male plug has a live-wire holder extending from an end thereof, and the live-wire holder has a second live wire extending from an end thereof opposite to the circular-live wire pin, wherein the circular neutral pin of the respective one male plug has a neutral-wire holder formed on an end thereof, and the neutral-wire holder has a second neutral wire extending from an end thereof opposite to the circular neutral pin.

5. The male plug and the female receptacle of the charger extension cable as claimed in claim 3, wherein the base of the respective one male plug has a male insulation sleeve and a receiving groove defined in the male insulation sleeve and configured to accommodate the guide segment of the respective female receptacle; the columnar ground pin of the respective one male plug has a ground-wire holder extending from an end thereof, and the ground-wire holder has a second ground wire extending from an end of the ground-wire holder opposite to the columnar ground pin; wherein the circular live-wire pin of the respective one male plug has a live-wire holder extending from an end thereof, and the live-wire holder has a second live wire extending from an end thereof opposite to the circular-live wire pin, wherein the circular neutral pin of the respective one male plug has a neutral-wire holder formed on an end thereof, and the neutral-wire holder has a second neutral wire extending from an end thereof opposite to the circular neutral pin.

6. The male plug and the female receptacle of the charger extension cable as claimed in claim 1, wherein a diameter of the columnar ground pin of the respective one male plug is less than a diameter of the circular live-wire pin and a diameter of the circular neutral pin; a diameter of the circular ground-wire socket of the respective one female receptacle is less than a diameter of the circular live-wire socket and the circular neutral-wire socket.

## Patentansprüche

1. Männlicher Stecker und weibliche Aufnahmebuchse eines Ladegerät-Verlängerungskabels für Elektrofahrzeuge, welche konfiguriert sind, um zwischen einem Heim-Elektrischer-Stromkreis und einer Ladepistole eines jeweils zugeordneten Elektrofahrzeugs angeschlossen zu sein, wobei der männliche Stecker und die weibliche Aufnahmebuchse des Ladegerät-Verlängerungskabels aufweisen:
einen Körper des Ladegerät-Verlängerungskabels, welcher ein erstes Verlängerungskabel aufweist, wobei ein distales Ende davon an einen ersten männlichen Stecker angeschlossen ist, und wobei der erste männliche Stecker elektrisch an den Heim-Elektrischer-Stromkreis angeschlossen ist, wobei der Heim-Elektrischer-Stromkreis einen Eingangsanschluss hat, welcher daran und an ein Stromausgangsende eines Hauptstromschalters des Heim-Elektrischer-Stromkreises in einer Stromausgangsrichtung elektrisch angeschlossen ist, wobei der Eingangsanschluss eine erste weibliche Aufnahmebuchse hat, welche an einem Ende davon entgegengesetzt zu dem Hauptstromschalter des Heim-Elektrischer-Stromkreises angeschlossen ist, und wobei die erste weibliche Aufnahmebuchse elektrisch an ei erstes Ende des ersten männlichen Steckers des ersten Verlängerungskabels angeschlossen ist;
wobei das erste Verlängerungskabel einen elektromagnetischen Schutzschalter aufweist, welcher an einem zweiten Ende des ersten Verlängerungskabels angeschlossen ist, wobei der elektromagnetische Schutzschalter einen Stromzähler hat, welcher an einem Stromausgangsende davon angeschlossen ist, wobei das Stromausgangsende des elektromagnetischen Schutzschalters an eine zweite weibliche Aufnahmebuchse über ein zweites Verlängerungskabel angeschlossen ist, und wobei eine Ausführung der zweiten weiblichen Aufnahmebuchse identisch zu einer Ausführung der ersten weiblichen Aufnahmebuchse ist, wobei die zweite weibliche Aufnahmebuchse konfiguriert ist, um an die Ladepistole des jeweiligen Elektrofahrzeugs anzuschließen, wobei die Ladepistole einen zweiten männlichen Stecker aufweist, welcher an einem ersten Ende davon angeschlossen ist, und wobei eine Ausführung des zweiten männlichen Steckers mit einer Ausführung des ersten männlichen Steckers identisch ist, wobei der zweite männliche Stecker an die zweite weibliche Aufnahmebuchse des zweiten Verlängerungskabels angeschlossen ist, wobei die Ladepistole ferner eine dritte weibliche Aufnahmebuchse aufweist, welche an einem zweiten Ende davon angeschlossen ist, und wobei eine Ausführung der dritten weiblichen Aufnahmebuchse mit den Ausführungen der ersten weiblichen Aufnahmebuchse und der zweiten weiblichen Aufnahmebuchse identisch ist;
wobei eine jeweilige von der ersten weiblichen Aufnahmebuchse, der zweiten weiblichen Aufnahmebuchse und der dritten weiblichen Aufnahmebuchse ein Substrat, eine Erdungsleitung-Rundbuchse, welche an einem vorderen Ende des Substrats der jeweiligen weiblichen Aufnahmebuchse gebildet ist, eine Stromführende-Leitung-Rundbuchse und eine Neutralleitung-Rundbuchse, welche benachbart zu der Erdungsleitung-Rundbuchse gebildet sind, aufweist, und wobei eine erste Breite und eine erste Höhe zwischen der Erdungsleitung-Rundbuchse und der Stromführende-Leitung-Rundbuchse gebildet sind, wobei eine zweite Breite und eine zweite Höhe zwischen der Erdungsleitung-Rundbuchse und der Neutralleitung-Rundbuchse gebildet sind, wobei die erste Breite nicht gleich der zweiten Breite ist, und wobei die erste Höhe nicht gleich der zweiten Höhe ist; und
wobei ein jeweiliger von dem ersten männlichen Stecker, dem zweiten männlichen Stecker und dem dritten männlichen Stecker eine Basis, einen Erdung-Säulenstift, welcher an einem vorderen Ende der Basis gebildet ist, einen Stromführende-Leitung-Rundstift und einen Neutralleitung-Rundstift, welche beide benachbart zu dem säulenförmigen Erdungsstift gebildet sind, aufweist, und wobei der säulenförmige Erdungsstift mit der Erdungsleitung-Rundbuchse der jeweils zugeordneten weiblichen Aufnahmebuchse korrespondiert, der Stromführende-Leitung-Rundstift mit der Stromführende-Leitung-Rundbuchse der jeweils zugeordneten weiblichen Aufnahmebuchse korrespondiert, und der Neutralleitung-Rundstift mit der Neutralleitung-Rundbuchse der jeweils zugeordneten weiblichen Aufnahmebuchse korrespondiert.

2. Männlicher Stecker und weibliche Aufnahmebuchse des Ladegerät-Verlängerungskabels gemäß Anspruch 1, wobei der Körper des Ladegerät-Verlängerungskabels ferner ein Schutzgehäuse aufweist, welches so konfiguriert ist, dass es den elektromagnetischen Schutzschalter und den Stromzähler beherbergt, und wobei das Schutzgehäuse einen Aufnahmeraum hat, welcher so konfiguriert ist, dass er das erste Verlängerungskabel und das zweite Verlängerungskabel aufnimmt.

3. Männlicher Stecker und weibliche Aufnahmebuchse des Ladegerät-Verlängerungskabels gemäß Anspruch 1, wobei das Substrat der jeweiligen weiblichen Aufnahmebuchse eine Weibliche-Isolation-Hülle und ein Führungssegment hat, welches sich von der Weibliche-Isolation-Hülle aus erstreckt; wobei die Erdungsleitung-Rundbuchse der jeweiligen weiblichen Aufnahmebuchse eine Erdungsleitung-Beherbergung-Ummantelung hat, welche sich von einem Ende davon aus erstreckt, und wobei die Erdungsleitung-Beherbergung-Ummantelung eine erste Erdungsleitung hat, welche sich von einem Ende der Erdungsleitung-Beherbergung-Ummantelung aus entgegengesetzt zu der Erdungsleitung-Rundbuchse erstreckt; wobei die Stromführende-Leitung-Rundbuchse der jeweiligen weiblichen Aufnahmebuchse eine Stromführende-Leitung-Beherbergung-Ummantelung hat, welche sich von einem Ende davon aus erstreckt, und wobei die Stromführende-Leitung-Beherbergung-Ummantelung eine erste stromführende Leitung hat, welche sich von einem Ende davon aus entgegengesetzt zu der Stromführende-Leitung-Rundbuchse erstreckt, wobei die Neutralleitung-Rundbuchse der jeweiligen weiblichen Aufnahmebuchse eine Neutralleitung-Beherbergung-Ummantelung hat, welche an einem Ende davon gebildet ist, und wobei die Neutralleitung-Beherbergung-Ummantelung eine erste Neutralleitung hat, welche sich von einem Ende davon aus entgegengesetzt zu der Neutralleitung-Rundbuchse erstreckt.

4. Männlicher Stecker und weibliche Aufnahmebuchse des Ladegerät-Verlängerungskabels gemäß Anspruch 1, wobei die Basis des jeweiligen männlichen Steckers eine Männliche-Isolation-Hülle und eine Aufnahmenut hat, welche in der Männliche-Isolation-Hülle definiert ist und konfiguriert ist, um das Führungssegment der jeweils zugeordneten weiblichen Aufnahmebuchse zu beherbergen; wobei der Erdung-Säulenstift des jeweiligen männlichen Steckers einen Erdungsleitungshalter hat, welcher sich von einem Ende davon aus erstreckt, und wobei der Erdungsleitungshalter eine zweite Erdungsleitung hat, welche sich von einem Ende des Erdungsleitungshalters aus entgegengesetzt zu dem Erdung-Säulenstift erstreckt; wobei der Stromführende-Leitung-Rundstift des jeweiligen männlichen Steckers einen Stromführende-Leitung-Halter hat, welcher sich von einem Ende davon aus erstreckt, und wobei der Stromführende-Leitung-Halter eine zweite stromführende Leitung hat, welche sich von einem Ende davon aus entgegengesetzt zu dem Stromführende-Leitung-Rundstift erstreckt, wobei der Neutralleitung-Rundstift des jeweiligen männlichen Steckers einen Neutralleitung-Halter hat, welcher an einem Ende davon gebildet ist, und wobei der Neutralleitung-Halter eine zweite Neutralleitung hat, welche sich von einem Ende davon aus entgegengesetzt zu dem Neutralleitung-Rundstift erstreckt.

5. Männlicher Stecker und weibliche Aufnahmebuchse des Ladegerät-Verlängerungskabels gemäß Anspruch 3, wobei die Basis des jeweiligen männlichen Steckers eine Männliche-Isolation-Hülle und eine Aufnahmenut hat, welche in der Männlichen-Isolation-Hülle definiert ist und konfiguriert ist, um das Führungssegment der jeweils zugeordneten weiblichen Aufnahmebuchse zu beherbergen; wobei der Erdung-Säulenstift des jeweiligen männlichen Steckers einen Erdungsleitungshalter hat, welcher sich von einem Ende davon aus erstreckt, und wobei der Erdungsleitungshalter eine zweite Erdungsleitung hat, welche sich von einem Ende des Erdungsleitungshalters aus entgegengesetzt zu dem Erdung-Säulenstift erstreckt; wobei der Stromführende-Leitung-Rundstift des jeweiligen männlichen Steckers einen Stromführende-Leitung-Halter hat, welcher sich von einem Ende davon aus erstreckt, und wobei der Stromführende-Leitung-Halter eine zweite stromführende Leitung hat, welche sich von einem Ende davon aus entgegengesetzt zu dem Stromführende-Leitung-Rundstift erstreckt, wobei der Neutralleitung-Rundstift des jeweiligen männlichen Steckers einen Neutralleitungshalter hat, welcher an einem Ende davon gebildet ist, und wobei der Neutralleitungshalter eine zweite Neutralleitung hat, welche sich von einem Ende davon aus entgegengesetzt zu dem Neutralleitung-Rundstift erstreckt.

6. Männlicher Stecker und weibliche Aufnahmebuchse des Ladegerät-Verlängerungskabels gemäß Anspruch 1, wobei ein Durchmesser des Erdung-Säulenstifts des jeweiligen männlichen Steckers kleiner ist als ein Durchmesser des Stromführende-Leitung-Rundstifts und ein Durchmesser des Neutralleitung-Rundstifts; wobei ein Durchmesser der Erdungsleitung-Rundbuchse der jeweiligen weiblichen Aufnahmebuchse kleiner ist als ein Durchmesser der Stromführende-Leitung-Rundbuchse und der Neutralleitung-Rundbuchse.

## Revendications

1. Une fiche mâle et une prise femelle d'un câble d'extension de chargeur pour véhicules électriques configurées pour être connectées entre un circuit électrique domestique et un pistolet de charge d'un véhicule électrique respectif, et la fiche mâle et la prise femelle du câble d'extension de chargeur comprenant :
un corps du câble d'extension de chargeur comprenant une première rallonge dont une extrémité distale est connectée à une première fiche mâle, et la première fiche mâle étant connectée électriquement au circuit électrique domestique, le circuit électrique domestique ayant une borne d'entrée connectée électriquement à celui-ci et à une extrémité de sortie de courant d'un interrupteur principal de puissance du circuit électrique domestique dans une direction de sortie de puissance, la borne d'entrée ayant une première prise femelle connectée à une extrémité de celle-ci opposée à l'interrupteur principal de puissance du circuit électrique domestique, et la première prise femelle étant connectée électriquement à une première extrémité de la première fiche mâle de la première rallonge ;
la première rallonge comprenant un interrupteur de protection électromagnétique connecté à une deuxième extrémité de la première rallonge, où l'interrupteur de protection électromagnétique a un compteur d'électricité connecté à une extrémité de sortie de courant de celui-ci, l'extrémité de sortie de courant de l'interrupteur de protection électromagnétique est connectée à une deuxième prise femelle par l'intermédiaire d'une deuxième rallonge, et une spécification de la deuxième prise femelle est identique à une spécification de la première prise femelle, où la deuxième prise femelle est configurée pour se connecter au pistolet de charge du véhicule électrique respectif, le pistolet de charge comprend une deuxième fiche mâle connectée à une première extrémité de celui-ci, et une spécification de la deuxième fiche mâle est identique à une spécification de la première fiche mâle, où la deuxième fiche mâle est connectée à la deuxième prise femelle de la deuxième rallonge, le pistolet de charge comprend en outre une troisième prise femelle connectée à une deuxième extrémité de celui-ci, et une spécification de la troisième prise femelle est identique aux spécifications des première et deuxième prises femelles ;
dans lesquelles une respective parmi les première, deuxième, troisième prises femelles comprend un substrat, une prise circulaire de fil de terre formée sur une extrémité avant du substrat de ladite une prise femelle respective, une prise circulaire de fil sous tension et un fil circulaire neutre qui sont formés de manière adjacente à la prise circulaire de fil de terre, et une première largeur et une première hauteur sont formées entre la prise circulaire de fil de terre et la prise circulaire de fil sous tension, où une deuxième largeur et une deuxième hauteur sont formées entre la prise circulaire de fil de terre et la prise circulaire de fil neutre, la première largeur n'est pas égale à la deuxième largeur, et la première hauteur n'est pas égale à la deuxième hauteur ; et
dans lesquelles une respective parmi les première, deuxième, troisième fiches mâles comprend une base, une broche de terre en forme de colonne formée sur une extrémité avant de la base, une broche circulaire de fil sous tension et une broche circulaire neutre qui sont toutes les deux formées de manière adjacente à la broche de terre en forme de colonne, et la broche de terre en forme de colonne correspond à la prise circulaire de fil de terre de ladite une prise femelle respective, la broche circulaire de fil sous tension correspond à la prise circulaire de fil sous tension de ladite une prise femelle respective, et la broche circulaire neutre correspond à la prise circulaire de fil neutre de ladite une prise femelle respective.

2. La fiche mâle et la prise femelle du câble d'extension de chargeur selon la revendication 1, dans lesquelles le corps du câble d'extension de chargeur comprend en outre un boîtier de protection configuré pour accueillir l'interrupteur de protection électromagnétique et le compteur d'électricité, et le boîtier de protection présente une cavité de réception configurée pour recevoir la première rallonge et la deuxième rallonge.

3. La fiche mâle et la prise femelle du câble d'extension de chargeur selon la revendication 1, dans lesquelles le substrat de ladite une prise femelle respective a un manchon d'isolation femelle et un segment de guidage s'étendant à partir du manchon d'isolation femelle ; la prise circulaire de fil de terre de ladite une prise femelle respective a une gaine de logement de fil de terre s'étendant à partir d'une extrémité de celle-ci, et la gaine de logement de fil de terre a un premier fil de terre s'étendant à partir d'une extrémité de la gaine de logement de fil de terre opposée à la prise circulaire de fil de terre ; dans lesquelles la prise circulaire de fil sous tension de ladite une prise femelle respective a une gaine de logement de fil sous tension s'étendant à partir d'une extrémité de celle-ci, et la gaine de logement de fil sous tension a un premier fil sous tension s'étendant à partir d'une extrémité de celle-ci opposée à la prise circulaire de fil sous tension, dans laquelle la prise circulaire de fil neutre de ladite une prise femelle respective a une gaine de logement de fil neutre formée sur une extrémité de celle-ci, et la gaine de logement de fil neutre a un premier fil neutre s'étendant à partir d'une extrémité de celle-ci opposée à la prise circulaire de fil neutre.

4. La fiche mâle et la prise femelle du câble d'extension de chargeur selon la revendication 1, dans lesquelles la base de ladite une fiche mâle respective a un manchon d'isolation mâle et une rainure de réception définie dans le manchon d'isolation mâle et configurée pour accueillir le segment de guidage de la prise femelle respective, la broche de terre en forme de colonne de ladite une fiche mâle respective comporte un support de fil de terre s'étendant à partir d'une extrémité de celle-ci, et le support de fil de terre comporte un deuxième fil de terre s'étendant à partir d'une extrémité du support de fil de terre opposée à la broche de terre en forme de colonne ; dans lesquelles la broche circulaire de fil sous tension de ladite une fiche mâle respective comporte un support de fil sous tension s'étendant à partir d'une extrémité de celle-ci, et le support de fil sous tension comporte un deuxième fil sous tension s'étendant à partir d'une extrémité de celui-ci opposée à la broche circulaire de fil sous tension, dans lesquelles la broche circulaire neutre de ladite une fiche mâle respective a un support de fil neutre formé sur une extrémité de celle-ci, et le support de fil neutre a un deuxième fil neutre s'étendant à partir d'une extrémité de celui-ci à l'opposé de la broche circulaire neutre.

5. La fiche mâle et la prise femelle du câble d'extension de chargeur selon la revendication 3, dans lesquelles la base de ladite une fiche mâle respective a un manchon d'isolation mâle et une rainure de réception définie dans le manchon d'isolation mâle et configurée pour accueillir le segment de guidage de la prise femelle respective ; la broche de terre en forme de colonne de ladite une fiche mâle respective a un support de fil de terre s'étendant à partir d'une extrémité de celle-ci, et le support de fil de terre a un deuxième fil de terre s'étendant à partir d'une extrémité du support de fil de terre opposée à la broche de terre en forme de colonne ; dans lesquelles la broche circulaire de fil sous tension de ladite une fiche mâle respective comporte un support de fil sous tension s'étendant à partir d'une extrémité de celle-ci, et le support de fil sous tension comporte un deuxième fil sous tension s'étendant à partir d'une extrémité de celui-ci opposée à la broche circulaire de fil souls tension, dans lesquelles la broche circulaire neutre de ladite une fiche mâle respective comporte un support de fil neutre formé sur une extrémité de celle-ci, et le support de fil neutre comporte un deuxième fil neutre s'étendant à partir d'une extrémité de celui-ci opposée à la broche circulaire neutre.

6. La fiche mâle et la prise femelle du câble d'extension de chargeur selon la revendication 1, dans lesquelles un diamètre de la broche de terre en forme de colonne de ladite une fiche mâle respective est inférieur à un diamètre de la broche circulaire de fil sous tension et à un diamètre de la broche circulaire de fil neutre ; un diamètre de la prise circulaire de fil de terre de ladite une prise femelle respective est inférieur à un diamètre de la prise circulaire de fil sous tension et de la prise circulaire de fil neutre.
